# EUROPEAN PATENT APPLICATION

(11) **EP 3 907 141 A1**
(43) Date of publication of application: **10.11.2021**
(21) Application number: 20382371.1
(22) Date of filing: 06.05.2020
(51) Int. Cl.: B64F 1/305

(54) **ARRANGEMENT COMPRISING A PASSENGER BOARDING BRIDGE**

(71) Applicant: thyssenkrupp Airport Solutions, S.A., 33682 Mieres (Asturias) (ES)
(72) Inventor: Murias Bermejo, Antonio, 33212 Gijón; Asturias (ES); Flórez Castro, Alberto, 33690 Lugo de Llanera, Asturias (ES); Viesca Pemán, Alejandro, 33420 Lugones, Asturias (ES); Yagüe Saldana, Juan, 33600 Mieres Asturias (ES); Escapa Galguera, Fernando, 33404 Las Vegas Corvera, Asturias (ES)
(74) Representative: Jacobi, Nicolas

(57) **Abstract**

Arrangement comprising,
a passenger boarding bridge (8),
an operating panel (5) connectable to the passenger boarding bridge,
the operating panel (5) having input elements (57b),
wherein the arrangement is adapted so that an operator can provide operation instructions (72) by means of the input elements (57b), based on which the passenger boarding bridge performs a docking and/or undocking procedure to or from an aircraft (1);
characterized in
that the operating panel (5) is releasably connectable to the passenger boarding bridge.

## Description

The invention refers to an arrangement comprising a passenger boarding bridge.

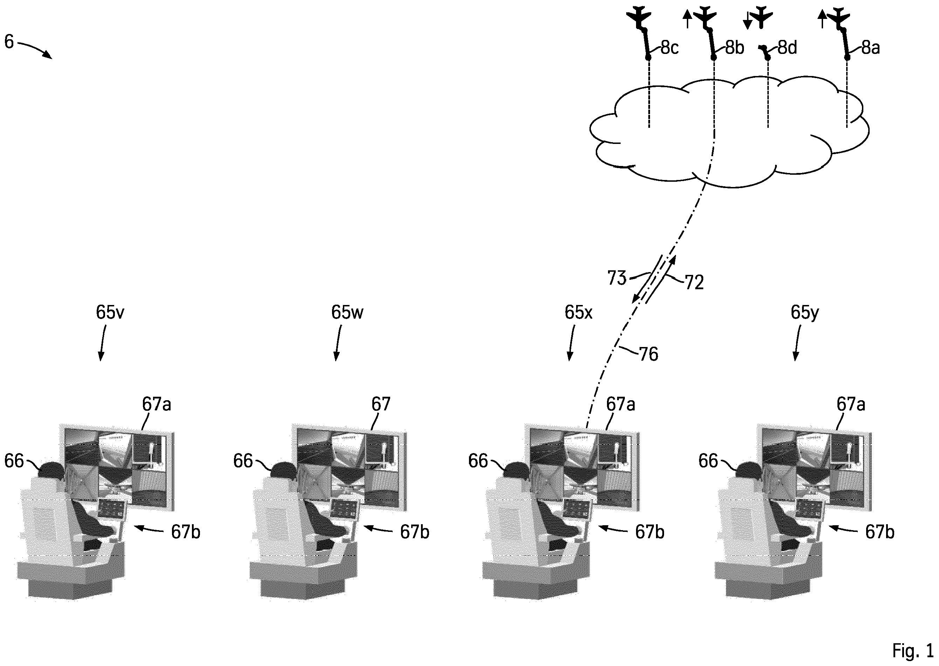

European patent application 20 156 870.6 describes a method for operating a passenger boarding bridge remotely. The operator, who is at least supervising the movement of the bridge, is not on site. The operator is working at a remote operating workstation 65 (see figure 1). The operator is provided with relevant operating information 73 via a data connection, which is displayed in a screen 67a to the operator 66. Via input elements 67b the operator can provide operation instructions 72, which is transmitted to the boarding bridge via a remote data connection. The operator can be located anywhere between a special operating room within the airport and a home office location. In each case the operator has no direct optical sight contact to the PBB.

In passenger boarding bridges according to the prior art an operating panel is installed at the cabin of the passenger boarding bridge so that an operator can operate the bridge on site. However the operating panel on site requires a lot of space and a significant cost. In case the passenger boarding bridge operated by a Remote Control System, the operating panel will be seldom or never used. A removal of this operating panel can allow to increase the space for the passenger transit which provides a better flow during the aircraft operations, additionally the cost for the operating panel can be saved. But it is unclear how to operate the passenger boarding bridge in case there is a broken data connection between the remote operating workstation and the bridge.

It is an object to provide improvements to the passenger boarding bridges, in particular for such bridges which are operated remotely.

The invention comprises a method and a network according to the main claims. Embodiments are subject of the subclaims and the description.

In an embodiment there is no fixed operating panel provided at the passenger boarding bridge. Instead there is provided a portable operating panel that can be used in different PBBs. The idea is to provide a number of these portable operating panels to the PBB staff of the airport. When it is required to drive a PBB locally, one of these portable operating panels can be used to control operation of the specific bridge.

The number of provided operating panels can be significantly lower than the number of PBBs provided at the airport. The operator equipped with the portable operating panel arrives at the PBB and connects the to the PBB control system. From that moment the operator can control the PBB and perform all the operations without restrictions. Now the operator can operate the PBB onsite, in particular when the data connection to the remote workstation has been broken.

The invention is explained in more detail by means of the figure, the figures show:
- Figure 1: remote operating network during remotely operating of several passenger boarding bridges from a plurality of remote operating workstations;
- Figure 2: a passenger boarding bridge to which portable operating panel is attached;
- Figure 3: a portable operating panel.

Based on the disclosure of European patent application 20 156 870.6 figure 1 shows a remote operations network 6 comprising a plurality of remote operation workstations 65v-y. Each of the workstations 65v-y can be connected by a temporary data connection 76 to an individual passenger boarding bridge 7a-d.

At each remote operating station 65 an operator 66 is present to give operation instructions 72 to one of the passenger boarding bridges 7 via the data connection 76.

Two basic technological approaches can be differentiated to operate the passenger boarding bridge 7 remotely:
1. Remote control technology (Enabler technology 1),
2. Automated docking / undocking technology (Enabler technology 2).

With the remote control technology (Enabler technology 1), the bridge operator controls the movement of passenger boarding bridges remotely via manual inputs from a joystick or other input means. Here the individual movements of the PBB are influenced by the operators input.

With the automated docking / undocking technology (Enabler technology 2), the bridge operator operates the passenger boarding bridge 7 by manual start of the procedure but without manual control inputs during the steering process. The individual movements of the PBB 7 are calculated by a drive controller and are not influenced by an operators input. Here the operator is in particular supervises the automatic docking procedure.

In an embodiment the enabler technologies 1 and 2 can be combined in one PBB. For example enabler technology 1 can be used for docking, and enabler technology 2 can be used for undocking.

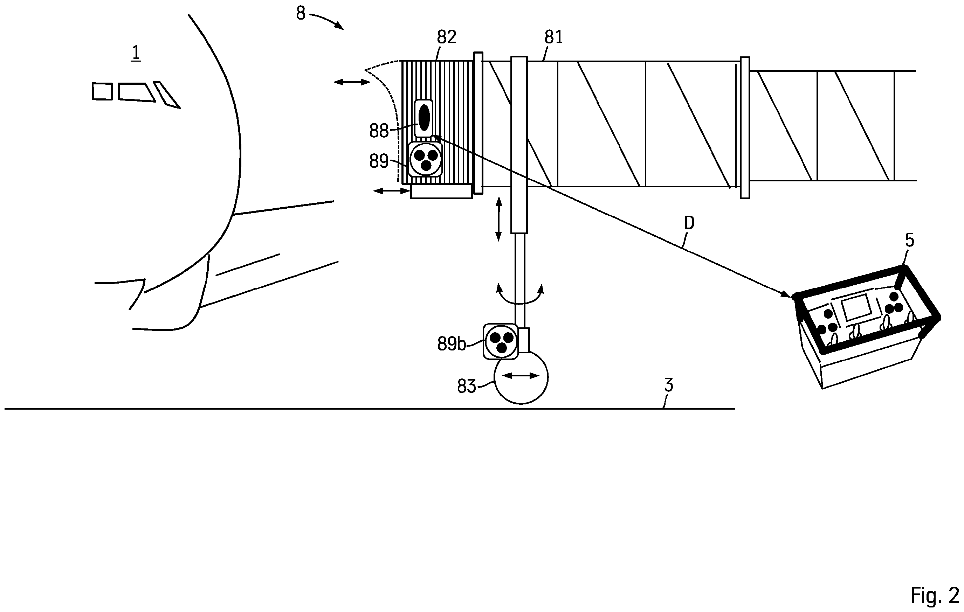

Figure 2 shows a passenger boarding bridge 7 during a docking procedure to an aircraft 1. As usual several components are driven to change their shape or position (see arrows) in order to the get passenger boarding bridge docked to the aircraft. Reference is made in particular to PCT/EP2019/082869, where several tasks to be performed during docking of the passenger boarding bridge are described. The passenger boarding bridge 8 does not comprise a fixedly installed operating panel.

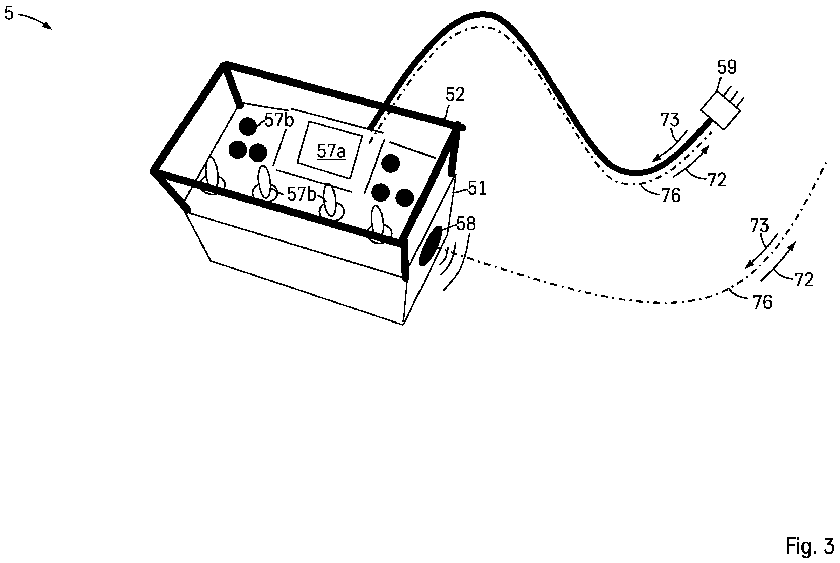

Figure 3 shows a portable panel 5, which can be carried by an operator. The operator panel 5 comprises a housing 51, which is accommodating the essential components of the operating panel 5. The operating panel comprises - similar to the remote workstation - operating interfaces such as a screen 57a and an input element 57b. A protective frame 52 is provided around the input elements 57b, to prevent accidental actuation of the input elements.

The remote operator panel 5can be connected to the passenger boarding bridge by connecting means 59, 58, such as wireless modules 58, 88 or a wired connection e.g. with a plug 59 and socket 89 connection.

During regular operation (standard) the passenger boarding bridge is operated via the remote connection from the remote workstation 65. In case there is a breakdown of the data connection an operator on site can walk to the passenger boarding bridge, connects the portable operating panel with the passenger boarding bridge and operates the passenger boarding bridge locally. Here the operator can stand in the cabin or he stands on apron ground. Therefore there are sockets provided at lower level in the near of the drive unit 83 of the passenger boarding bridge or at the cabin.

During operating the passenger boarding bridge with the portable operating panel the following steps are performed:
Reducing a distance D between the operating panel 5 and the passenger boarding bridge 8; in particular the operating panel is moved to the passenger boarding bridge, so that the passenger boarding bridge and the aircraft to be docked is in direct line of sight of the operator. The operating panel is connected to the passenger boarding bridge 8 so as to establish a data connection 76 between the second passenger boarding bridge 8 and the operating panel (5). This can be performed by simply establishing a plugged connection or a wireless connection in particular by means of a local data connection like Bluetooth or WLAN. Now the arrangement is ready for being operated.

In a validation step it is validated, that the operating panel is connected to the correct passenger boarding, in particular if a plurality of boarding bridges is in connecting range of the connecting means. In particular this validation step is important in case of a wireless connection between the operating panel and the passenger boarding bridge.

In another step operating instructions 73 are transmitted via the data connection 76 between the operating panel and the second passenger boarding bridge, wherein the operating instructions 73 are provided by an operator via input elements 57b of the operator panel 5.

After the operating procedure has finished, the operating panel is disconnected from the second passenger boarding bridge 8, so that the data connection 76 is terminated.

Now the operating panel is moved away from the passenger boarding bridge, wherein the distance D between the operating panel 5 and the second passenger boarding bridge 8 is increased. The operating panel may be moved to another separate passenger boarding bridge for operating this separate passenger boarding bridge.

In an embodiment not explicitly shown in the figures the operating panel is an tablet PC or a mobile phone on which a suitable application (App) is running. The input element can a softkey presented via software on the display of the tablet PC or the mobile phone.

### List of reference signs

- 1: aircraft
- 5: portable operating panel
- 6: remote operating network
- 8: Passenger boarding bridge
- 51: housing
- 52: protective frame around input elements
- 57: operating interface
- 57a: screen
- 57b: input element
- 58: first wireless module
- 59: Plug
- 65: remote operating workstation
- 66: bridge operator
- 67: operating interface
- 67a: screen
- 67b: input element
- 72: operating instruction
- 73: operating information
- 76: temporarily established operating connection
- 81: tunnel
- 82: cabin at bridgehead
- 88: second wireless module
- 89: socket
- D: distance

## Claims

1. Arrangement comprising,
a passenger boarding bridge (8),
operating panel (5) connectable to the passenger boarding bridge,
the operating panel (5) having input elements (57b),
wherein the arrangement is adapted so that an operator can provide operation instructions (72) by means of the input elements (57b), based on which the passenger boarding bridge performs a docking and/or undocking procedure to or from an aircraft (1);
**characterized in**
**that** the operating panel (5) is releasably connectable to the passenger boarding bridge.

2. Arrangement according to the preceding claim,
**characterized in**
**that** the operating panel (5) is movable independently from the passenger boarding bridge, in particular portable.

3. Arrangement according to the preceding claim,
wherein movable means, that
- the operating panel is movable independently from the passenger boarding bridge, and/or
- the operating panel (5) is, in particular during intended use, at least temporarily not connected to the passenger boarding bridge (8),
and/or
- that the operating panel (5) has a weight of less than 5kg.

4. Arrangement according to the preceding claim,
wherein during connection between the operating panel and the passenger boarding bridge the operating panel is located at a maximum distance (D) to a brigdehead (82) of the passenger boarding bridge (8) of max. 200m.

5. Arrangement according to any of the preceding claims,
**characterized by**
a remote operating workstation (65) fixedly located remotely from the passenger boarding bridge (8), adapted to provide operating instructions (72) via a temporary established data connection (76) between the remote operating workstation (65) and the passenger boarding bridge (8).

6. Arrangement according to any of the preceding claims,
**characterized in**
**that** the operating panel (5) having at least an output element (57a), in particular a screen (57b),
wherein the arrangement is adapted output operation information (73) provided by the passenger boarding bridge (8) to the operator.

7. Arrangement according to any of the preceding claims,
**characterized in**
**that** the operating panel (5) is adapted to be
- selectively connected to one of a plurality of passenger boarding bridges (8a-d),
- afterwards releasable from said one passenger boarding bridges (8a-d),
- afterwards selectively connected to another one of the plurality of passenger boarding bridges (8a-d).

8. Method of operating an arrangement according to any of the preceding claims, comprising the steps of:
- reducing a distance (D) between the operating panel (5) and a first passenger boarding bridge (8),
- connecting the operating panel (5) to the first passenger boarding bridge (8) so as to establish a data connection (76) between the first passenger boarding bridge (8) and the operating panel (5),
- transmitting operating instructions (72) via a data connection (76) between the operating panel and the first passenger boarding bridge, wherein the operating instructions (73) are provided by an operator via input elements (57b) of the operator panel (5),
- afterwards, in particular after operating procedure has finished, disconnecting the operating panel from the first the passenger boarding bridge (8), so that the data connection (76) is terminated,
- increasing the distance (D) between the operating panel (5) and the first passenger boarding.

9. Method to the preceding claim, comprising the following subsequent steps:
- reducing a distance (D) between the operating panel (5) and a second passenger boarding bridge (8),
- connecting the operating panel (5) to the second passenger boarding bridge (8) so as to establish a data connection (76) between the second passenger boarding bridge (8) and the operating panel (5),
- transmitting operating instructions (73) via a data connection (76) between the operating panel and the second passenger boarding bridge, wherein the operating instructions (73) are provided by an operator via input elements (57b) of the operator panel (5),
- afterwards, in particular after operating procedure has finished, disconnecting the operating panel from the second passenger boarding bridge (8), so that the data connection (76) is terminated,
- increasing the distance (D) between the operating panel (5) and the second passenger boarding bridge (8).

10. Method of operating an arrangement according to claim 5, in particular in combination with the method of claim 8 or 9,
wherein in a first operating mode the operating instructions (72) are provided by the remote operating workstation, and
wherein in a second operating mode the operating instructions (72) are provided by the portable operating panel (5).

11. Method according to the preceding claim,
wherein the first operating mode is the standard mode of operation, and
the second operation mode is used, if it is not possible to operate the passenger boarding bridge according to the first operation mode, in particular if the temporary data connection (76) can not be established between the remote operating workstation (65) and the passenger boarding bridge (8).

12. Method according to any of claims 8 to 11, comprising the step after a connection has established between a first passenger boarding bridge selected out of a plurality of boarding bridges and the operating panel (5):
performing a validation step, in which it is validated that the first passenger boarding bridge is the correct passenger boarding bridge to which the operating panel is intended to be connected to.
